Europäisches Patentamt

European Patent Office

Office européen des brevets

(19)

(11) **EP 0 570 273 B1**

(12) **FASCICULE DE BREVET EUROPEEN**

(45) Date de publication et mention
de la délivrance du brevet:
**11.03.1998 Bulletin 1998/11**

(51) Int Cl.[6]: **H04J 13/00**

(21) Numéro de dépôt: **93401199.0**

(22) Date de dépôt: **11.05.1993**

(54) **Procédé de désétalement en réception d'un signal en large bande**

Verfahren zur Entspreizung beim Empfang eines Breitbandsignals

Method for despreading of a wideband signal at reception

(84) Etats contractants désignés:
**BE CH DE GB IT LI SE**

(30) Priorité: **14.05.1992 FR 9205863**

(43) Date de publication de la demande:
**18.11.1993 Bulletin 1993/46**

(73) Titulaire: **MATRA COMMUNICATION**
**29562 Quimper (FR)**

(72) Inventeurs:
- **Bossennec, Jean-Louis**
  **F-78990 Elancourt (FR)**
- **Lucas, Philippe**
  **F-91120 Palaiseau (FR)**
- **Mege, Philippe**
  **F-92340 Bourg la Reine (FR)**

(74) Mandataire: **Fruchard, Guy et al**
**CABINET BOETTCHER**
**23, rue la Boétie**
**75008 Paris (FR)**

(56) Documents cités:
**US-A- 4 281 409          US-A- 4 649 549**

- **IEEE TRANSACTIONS ON COMMUNICATION TECHNOLOGY vol. 36, no. 1, 1 Janvier 1988, NEW YORK US pages 50 - 60 H. VINCENT POOR ET AL. 'SINGLE-USER DETECTORS FOR MULTIUSER CHANNELS'**
- **IEEE TRANSACTIONS ON COMMUNICATION TECHNOLOGY vol. 35, no. 11, 11 Novembre**
- **1987, NEW YORK US pages 1189 - 1198 JAMES S. LEHNERT ET AL. 'Multipath diversity reception of spread-spectrum multiple-access communications.'**

## Description

La présente invention concerne un procédé de désétalement en réception d'un signal en large bande résultant de la somme de signaux de communication étalés selon un procédé d'accès multiple à répartition par code.

On sait que lorsque l'on veut transmettre simultanément plusieurs signaux radio dans une même bande de fréquence, on peut utiliser un procédé d'accès multiple à répartition par code, plus généralement appelé par des professionnels Code Division Multiple Access, en abrégé CDMA. Ce procédé consiste à transformer des signaux de base en bande étroite en un signal en bande large, en mélangeant chaque signal en bande étroite avec un signal en bande large modulé selon une séquence d'étalement préétablie associée au signal en bande étroite, puis en effectuant la somme des signaux en bande large obtenus.

Le temps élémentaire de la séquence d'étalement, habituellement appelé temps chip, est dans un rapport L avec le temps élémentaire du signal de base, habituellement appelé temps bit, c'est-à-dire que le temps chip est contenu L fois dans le temps bit. L est dénommé gain d'étalement.

En notant $b_i(t)$ un signal de base de rang $i$, et $C_i(t)$ la séquence d'étalement qui lui est associée, le signal en bande large $r(t)$ résultant de la somme de M signaux de base transmis s'écrit :

$$r(t) = b_1(t).C_1(t) + b_2(t).C_2(t) + \ldots + b_M(t).C_M(t) = \sum_{i=1}^{M} b_i(t).C_i(t)$$

Du bruit, noté $\eta(t)$, vient s'ajouter à ce signal pendant la transmission

A la réception, il est nécessaire de pouvoir détecter l'un des signaux de base dans le signal reçu. Pour cela il est connu de procéder à un désétalement du signal reçu en assurant une corrélation du signal reçu avec la séquence d'étalement correspondante.

Le signal obtenu est symbolisé par un produit scalaire. Pour démoduler le signal de base de rang $i$ on assurera donc une corrélation de $r(t)$ avec $C_i(t)$, ce qui s'écrit :

$$\langle r(t), C_i(t) \rangle = \int_{\tau_o}^{\tau_o+T_b} r(t).C_i(t).dt + \int_{\tau_o}^{\tau_o+T_b} \eta(t).C_1(t)$$

où $\tau_o$ est l'instant de départ de l'intégration et $T_b$ est la durée d'un temps bit. Pendant la durée d'un temps bit le signal de base est constant et le produit scalaire $\langle C_i(t), C_i(t) \rangle$ normé est égal à 1 pour une intégration sur un temp chip. Sur un temps bit contenant L temps chip, le signal démodulé s'exprimera donc selon la formule :

$$\langle r(t), C_i(t) \rangle = L.b_i + \sum_{j=1, j \neq i}^{j=M} b_j \langle C_j(t), C_i(t) \rangle + \sum_{j=1}^{j=M} \eta(t).C_i(t)$$

Il est connu d'éliminer le produit scalaire $\langle C_i(t), C_i(t) \rangle$ pour $j \neq i$ en prévoyant au départ des séquences d'étalement orthogonales entre elles de sorte que ce produit scalaire est nul. le bit du signal de base $b_i(t)$ à l'instant $n$ considéré est alors extrait sans difficulté en comparant le signal restant à un seuil afin de déterminer si $b_i(n)$ vaut O ou 1.

Le procédé connu de désétalement par corrélation avec les séquences d'étalement initiales serait satisfaisant s'il existait une orthogonalité totale des séquences d'étalement entre elles.

Toutefois, une orthogonalité totale n'est pas possible en raison des décalages qui surviennent entre les séquences d'étalement contenues dans le signal transmis et les séquences d'étalement utilisées pour assurer une corrélation, notamment en raison des chemins multiples suivis par les signaux de base émis par les différentes sources, ou en raison d'un décalage d'émission des signaux de base en bande large. Ce décalage provoque une intercorrélation qui ne permet pas de rendre nuls tous les produits scalaires $\langle C_j(t), C_i(t) \rangle$ pour $j \neq i$.

A ce propos il est connu du document US-A-4.281.409 un procédé de désétalement en réception d'un signal en large bande résultant de la somme de signaux de communication étalés au moyen de séquences d'étalement propres à chacun des signaux de communication, dans lequel le désétalement est obtenu en assurant une corrélation du signal reçu sur un temps bit selon des combinaisons linéaires des séquences d'étalement, chacune des combinaisons linéaires étant orthogonale à toutes les séquences d'étalement sauf une, et en sommant le signal obtenu sur un temp bit. Le procédé proposé dans ce document est satisfaisant lorsque les séquences d'étalement sont synchrones mais un procédé très lourd est proposé lorsque les séquences d'étalement ne sont pas synchrones.

Un but de l'invention est de proposer un procédé de désétalement en réception très efficace même lorsque les séquences d'étalement ne sont pas synchrones.

Dans ce but on propose selon l'invention un procédé utilisant des combinaisons linéaires des séquences d'étalement en relation avec un signal en large bande dans lequel les séquences d'étalement sont décalées les unes par rapport aux autres d'une portion de temps bit, caractérisé en ce que les combinaisons linéaires des séquences d'étalement sont obtenues à partir d'une matrice des coefficients des combinaisons linéaires réalisée de la façon suivante : on ordonne les séquences d'étalement selon des retards relatifs croissants, on détermine un temps symbole couvrant chaque signal de communication sur au moins un temps bit complet et on établit une matrice des coefficients des combinaisons linéaires en formant une matrice représentative des séquences d'étalement ayant des lignes chacune représentative d'une séquence d'étalement pour chaque bit de chaque signal de communication inclus dans le temps symbole, en effectuant un produit de cette matrice avec une matrice transposée de cette matrice, en inversant la matrice du produit et en sélectionnant au milieu de la matrice inversée une matrice rectangulaire ayant un nombre de lignes égal au nombre de signaux de communication.

D'autres caractéristiques et avantages de l'invention apparaîtront à la lecture de la description qui suit de modes de mise en oeuvre particuliers non limitatifs de l'invention en relation avec les figures ci-jointes parmi lesquelles :

- la figure 1 est une représentation schématique du signal de communication de rang $i$ et de la séquence d'étalement correspondante,
- la figure 2 est une illustration schématique du procédé de l'invention lors de la transmission d'un signal depuis une base de transmission vers des stations mobiles,
- la figure 3 est une représentation schématique des signaux de communication dans le cas où ils sont synchrones,
- la figure 4 est la représentation de la matrice des séquences d'étalement dans le cas synchrone,
- la figure 5 est la représentation de la matrice des coefficients des combinaisons linéaires de désétalement,
- la figure 6 illustre la configuration d'une station mobile selon une variante de réalisation de la figure 2,
- la figure 7 est une illustration schématique du procédé de l'invention lors de la réception d'un signal par la base de transmission à la suite de l'émission par des stations mobiles,
- la figure 8 est une représentation schématique des séquences d'étalement dans le cas de signaux de communication asynchrones,
- la figure 9 est une représentation schématique de la réorganisation des représentations des séquences d'étalement dans le cas où les signaux de communication sont asynchrones.

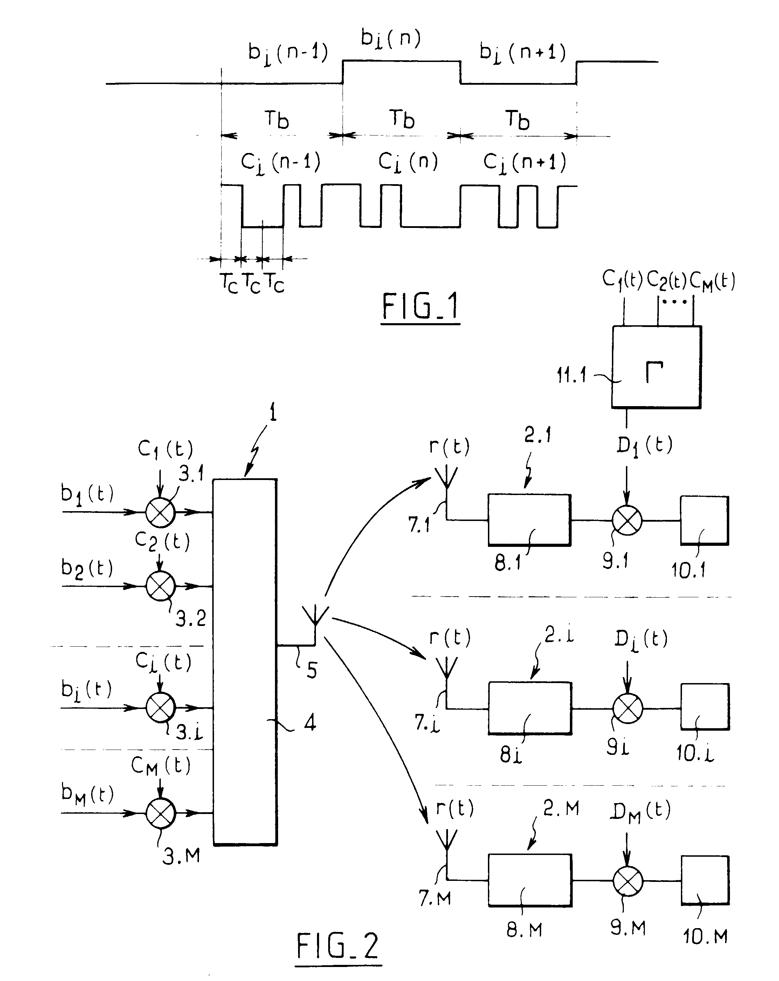

La figure 1 illustre schématiquement un signal de communication $b_i$ formé d'une série de bits contenus dans le signal en bande étroite. Pour passer en bande large le signal $b_i$ est mélangé avec une séquence d'étalement $C_i$ de fréquence plus élevée. Dans l'exemple illustré le coefficient d'étalement $L$ est de 6 seulement c'est-à-dire que le temps chip $T_c$ est six fois plus court que le temps bit $T_b$. En général le rapport est beaucoup plus important. Le signal de communication a par exemple un débit de 8 kbits/s tandis que la séquence d'étalement a un débit de 1 Mbits/s. Sur un temps bit le signal $b_i$ est constant et la lettre $n$ désigne le temps bit d'ordre $n$ par référence à une origine de décompte des bits. Par la suite, pour une plus grande simplicité du langage, on appellera séquence d'étalement associée au temps bit d'ordre $n$, notée $C_i(n)$, la portion de séquence d'étalement $C_i(t)$ qui correspond au temps bit d'ordre $n$.

La figure 2 illustre le procédé selon l'invention en relation avec une transmission de $M$ signaux de communication depuis une base de transmission généralement désignée en 1 vers une série de stations mobiles généralement désignées par la référence 2 et de façon plus particulière par les références 2.1 ... 2.$i$ ... 2.$M$. La station de base comporte des moyens, qui n'ont pas été représentés, pour générer des signaux de communication en bande étroite $b_1(t)$, $b_2(t)$... $b_i(t)$.... $b_M(t)$ variables en fonction du temps. D'une façon connue la base de transmission comporte également des mélangeurs 3.1, 3.2..... 3.$i$.... 3.$M$ pour étaler chaque signal de communication $b_i(t)$ au moyen de la séquence d'étalement $C_i(t)$ correspondante. Contrairement à certains procédés connus, aucune contrainte d'orthogonalité n'est imposée aux séquences d'étalement $C_i(t)$, la seule contrainte étant que les séquences soient différentes les unes des autres sur un temps bit. Les signaux en bande large obtenus sont transmis à un émetteur 4 qui assure au moyen d'une antenne 5 la transmission du signal regroupant tous les signaux de communication en bande large.

Chacune des stations mobiles est équipée d'une antenne réceptrice 7.1, ..... 7.$i$ ..... 7.$M$ associée à un récepteur 8.1, ..... 8.$i$ ..... 8.$M$ qui assure les phases habituelles de prétraitement du signal telles que les transpositions de fréquence, le filtrage, et l'échantillonnage dans le cas d'un traitement numérique. Du bruit $\eta_i(t)$ non représenté sur la figure s'ajoute au signal reçu par chaque station mobile 2.$i$. Les signaux ainsi prétraités parviennent à un mélangeur 9.1, ...

9.*i* ... 9.*M* qui assure une corrélation du signal reçu avec une séquence de désétalement $D_1(t)$... $D_i(t)$.... $D_M(t)$ correspondant à la communication destinée à la station mobile considérée. Le mélangeur est suivi d'un intégrateur ou d'un sommateur 10.1, ..... 10.*i* ..... 10.*M* selon que le signal est traité de façon analogique ou numérique, afin d'effectuer l'intégration ou la sommation du signal corrélé sur un temps bit du signal $r(t)$ reçu.

Il est connu de pouvoir générer à la base de transmission 1 des signaux de communication $b_i(t)$ synchrones et des séquences d'étalement qui sont également synchrones. En supposant qu'il n'y ait pas de chemins multiples, le signal $r(t)$ reçu par une station mobile contiendra toutes les communications agencées de façon synchrone.

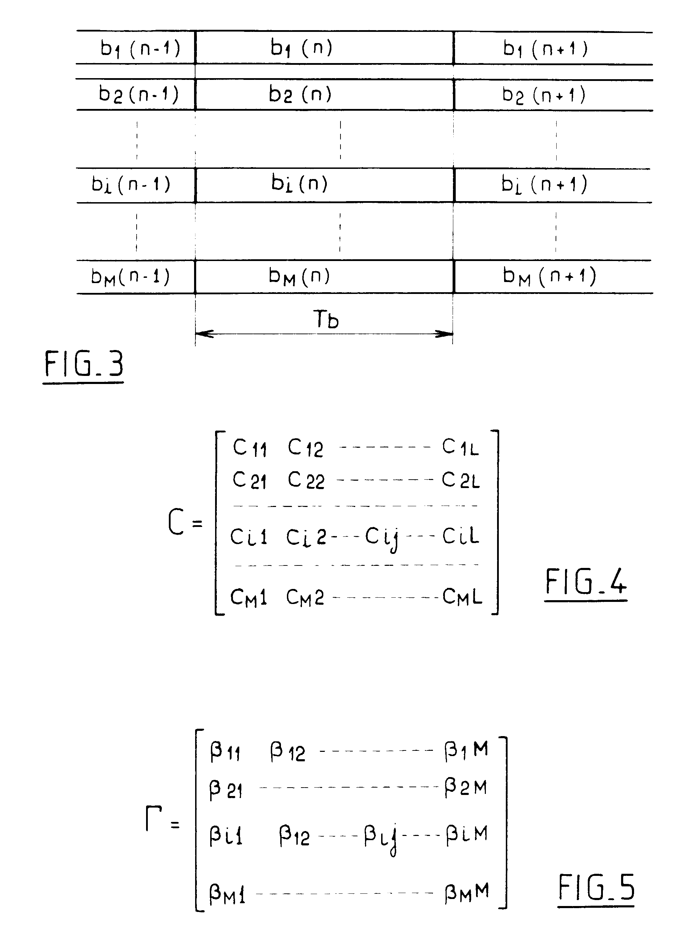

La figure 3 illustre schématiquement la succession des bits pour l'ensemble des *M* communications. Tous les bits d'ordre *n* étant synchronisés, on constate qu'il suffit de corréler le signal sur un Temps bit $T_b$ pour extraire un bit complet de n'importe quel signal de communication.

Par ailleurs, sur un temps bit les *M* signaux d'étalement correspondants aux *M* signaux de communication comprennent chacun *L* bits. On va désigner par la suite $C_{ij}$ la valeur du bit d'ordre *j* de la séquence d'étalement de rang *i*. L'ensemble des séquences d'étalement sur un temps bit est alors représenté par une matrice *C* à *M* lignes et *L* colonnes qui est illustrée par la figure 4. On notera que dans les procédures connues de fonctionnement des réseaux CDMA, une information est transmise aux différentes stations mobiles sur les séquences d'étalement et il est également connu de synchroniser les stations mobiles avec la station de base. En utilisant les techniques connues il est donc possible d'établir la matrice *C* dans une unité de calcul 11 disposée dans chaque station mobile, seule l'unité de calcul 11.1 de la station mobile 2.1 ayant été représentée sur la figure 3 pour ne pas alourdir cette figure.

A partir de cette matrice on calcule la matrice d'intercorrélation en effectuant le produit de la matrice *C* par la matrice transposée de *C*, puis on inverse la matrice d'intercorrélation. L'inverse de la matrice d'intercorrélation sera notée $\Gamma$ et est donc donnée par la formule

$$\Gamma = [C.C^t]^{-1}$$

en appelant $\beta_{ij}$ les coefficients de cette matrice on obtient la représentation illustrée par la figure 5.

On obtient alors les séquences de désétalement $D_i(t)$ en multipliant la matrice $\Gamma$ par la matrice *C*.

$$D = \Gamma . C$$

C'est-à-dire :

$$D_i(t) \; = \; \sum_{l=1}^{M} \beta_{il.} C_l(t)$$

On remarquera qu'en raison de la façon dont la matrice $\Gamma$ a été calculée, la séquence de désétalement $D_i(t)$ est orthogonale à toutes les séquences d'étalement $C_j(t)$ pour $i \neq j$. Sur un temps bit l'expression

$$\sum_{k=1}^{L} C_j(k) . D_i(k)$$

c'est-à-dire

$$\sum_{k=1}^{L} C_j(k) . \sum_{l=1}^{M} \beta_{il} C_l(k)$$

est nulle pour $I \neq j$ et est égale à 1 our $I = j$.

Lorsque le signal $r(t)$ reçu est corrélé avec la séquence de désétalement $D_i(t)$ après échantillonnage selon la fréquence du temps chip, on obtient

$$\langle r(n),D_i(n)\rangle = \sum_{j=1}^{M} b_j(n)\cdot\sum_{k=1}^{L}[C_j(k)\cdot\sum_{l=1}^{M}\beta_{il}C_l(k)] + \sum_{k=1}^{L}\eta_i(k)\cdot D_i(k)$$

Compte tenu de l'orthogonalité du $D_i$ avec les $C_j$ pour $i \neq j$, on obtient finalement :

$$\langle r(n),D_i(n)\rangle = Lb_i(n) + \sum_{k=1}^{L}\eta_i(k)\cdot D_i(k)$$

On constate immédiatement qu'en faisant de façon habituelle une comparaison à un seuil on extrait $b_i(n)$.

L'ensemble du calcul de la matrice r est renouvelé à chaque temps bit afin d'extraire successivement les bits composant le signal de communication considéré. Il n'est pas nécessaire de calculer l'ensemble des séquences de désétalement $D_i(t)$ à chaque station mobile puisqu'une station mobile n'est intéressée que par le désétalement du signal de la communication qui lui est destinée.

En pratique on calculera donc le produit de $\Gamma$ par $C$ pour une seule ligne de $\Gamma$ à chaque station mobile.

On remarquera également que la corrélation du signal $r(t)$ selon des combinaisons linéaires des séquences d'étalement $C_i(t)$ peut être effectuée soit directement au moyen des séquences de désétalement $D_i(t)$ qui sont des combinaisons linéaires des séquences d'étalement, soit en effectuant tout d'abord une corrélation du signal reçu avec les séquences d'étalement $C_i(t)$ puis en effectuant des combinaisons linéaires des signaux ainsi corrélés. Cette dernière variante n'est pas intéressante dans le cas d'une station mobile qui désétale une seule communication mais peut l'être pour une station (fixe ou mobile) qui désétalerait un ensemble de communications.

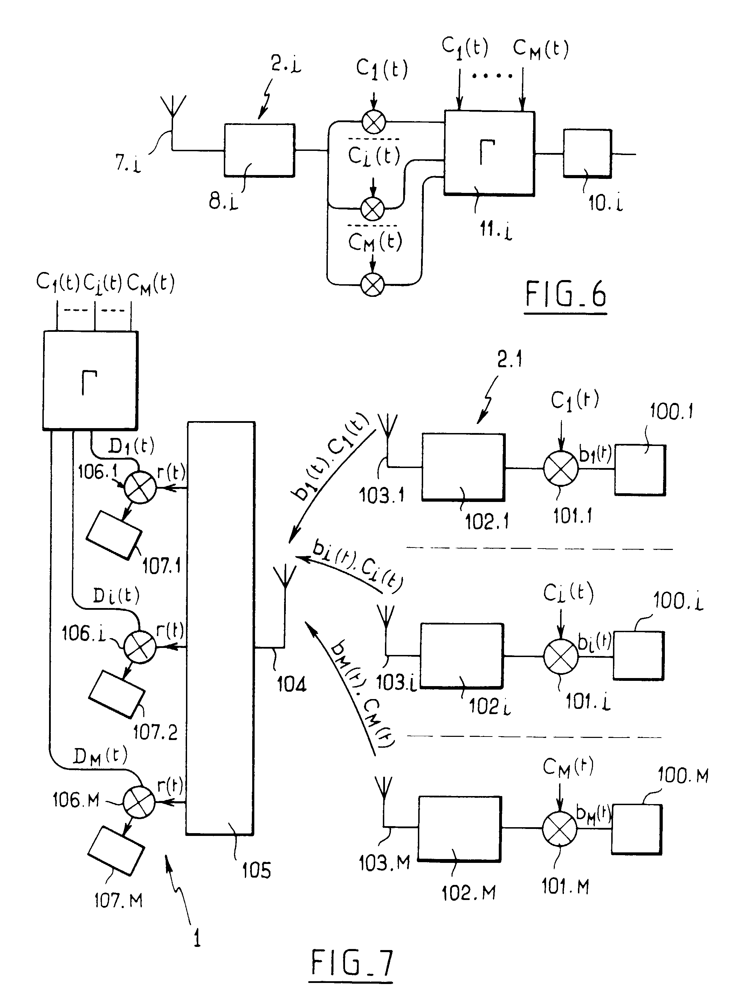

La figure 6 illustre une station mobile 2.$i$ agencée pour mettre en oeuvre cette variante du procédé selon l'invention. L'unité de calcul de la matrice $\Gamma$ est cette fois en aval du mélangeur 9.1 de sorte que la sommation sur un temps bit de signaux corrélés selon des combinaisons linéaires des séquences d'étalement s'exprimera cette fois par la formule initiale

$$\sum_{l=1}^{M}\beta_{il}\cdot\sum_{j=1}^{M}[b_j(n)\cdot\sum_{k=1}^{L}C_j(k)\cdot C_l(k)] + \sum_{k=1}^{L}\eta_i(k)\cdot C_i(k)$$

qui devient, compte tenu de l'orthogonalité des combinaisons linéaires par les coefficients $\beta_{il}$ :

$$L\cdot b_i(n) + \sum_{k=1}^{L}\eta_i(k)\cdot\sum_{l=1}^{M}\beta_{il}\cdot C_i(k)$$

Compte tenu des relations entre les $D_i(t)$ et les $C_i(t)$ (voir ci-dessus), cette formule est bien identique à la formule de la démodulation exposée précédemment.

Cette solution présente l'avantage de permettre l'utilisation des mêmes corrélateurs pour la mise en oeuvre du procédé selon l'invention ou du procédé connu rappelé au début de la description.

Une autre variante consiste à disposer l'organe de calcul 11 des combinaisons linéaires en aval de l'intégrateur 10. En effet, les coefficients $\beta_{ij}$ sont constants sur un temps bit. L'intégration est alors effectuée au rythme chip et la combinaison linéaire des signaux est ensuite effectuée au rythme bit afin d'annuler les interférences. Le calcul de la matrice $\Gamma$ peut a priori apparaître extrêmement lourd. Toutefois, dans la mesure où les séquences d'étalement sont bien choisies, les intercorrélations situées de part et d'autre de la diagonale de la matrice sont faibles vis à vis des éléments diagonaux qui représentent les autocorrélations de différentes séquences d'étalement.

Dans la mesure où le système est synchrone, la matrice d'autocorrélation est symétrique et fortement inversible (a priori, puisque la diagonale est grande vis à vis des autres éléments).

Avec des techniques d'inversion classique le problème est de l'ordre de $M^3$, si M est la dimension du système. Dans la mesure où la matrice à inverser est définie positive (toutes les valeurs propres de la matrice sont positives) alors on peut utiliser la factorisation de Choleski pour inverser la matrice. Mais ceci ne fait diminuer que d'un facteur 2 la complexité du problème.

Rappelons tout de même que le calcul de la matrice d'intercorrélation des séquences d'étalement doit s'effectuer tous les temps bits, ainsi que l'inversion de cette même matrice. En effet, dans le cas où il n'existe pas de relation simple dans les séquences d'étalement d'un bit à l'autre et entre les séquences, on doit refaire tous les calculs précédemment décrits. Dans le cas synchrone l'inversion de la matrice donne en une seule fois l'ensemble des $\beta_{ij}$ pour toutes les communications.

On se rend compte que l'on peut très certainement diminuer cette complexité en introduisant des relations simples. Par exemple, si on utilise des séquences d'étalement ayant une périodicité d'un temps bit, la matrice à calculer est identique à chaque bit. Par conséquent, il suffit de calculer la matrice inverse une fois pour toute, ce qui évite le calcul fastidieux à chaque temps bit.

On remarquera que le procédé selon l'invention est exploitable avec des signaux de comunication ayant des débits différents. Pour que le système puisse fonctionner de façon synchrone il faut toutefois que les différents débits soient proportionnels afin que le temps bit du débit le plus fort soit contenu un nombre entier de fois dans le temps bit de débit le plus faible ; le procédé selon l'invention est alors mis en oeuvre selon le débit le plus fort, ce qui donne une information surabondante pour les signaux de plus faible débit.

La figure 7 illustre la transmission de signaux de communication depuis les stations mobiles 2.1 .... 2.$i$ .... 2.$M$ vers une base de transmission 1. A cet effet les stations mobiles sont équipées de générateurs de signaux en bande étroite 100.1.... 100.i.... 100.M reliés à des mélangeurs de signaux 101.1.... 101.$i$.... 101.$M$ pour transformer le signal en bande étroite en un signal en bande large au moyen des séquences d'étalement $C_1(t)$....$C_i(t)$.... $C_M(t)$. Le signal en bande large de chaque station mobile est transmis au moyen d'un émetteur 102.1.... 102.$i$.... 102.$M$ associé à une antenne émettrice 103.1.... 103.$i$.... 103.$M$. Les différents signaux sont reçus par une antenne réceptrice 104 de la base de transmission et forment donc pour la base de transmission un seul signal $r(t)$ qui est transmis par le récepteur 105 à des mélangeurs 106.1.... 106.$i$.... 106.$M$ pour désétaler le signal au moyen de séquences de désétalement $D_i(t)$... $D_i$ $(t)$.... $D_M(t)$ et extraire la composante relative à chaque signal de communication au moyen d'une unité de traitement 107.1.... 107.$i$.... 107.$M$ disposée en aval du mélangeur.

Toutefois, contrairement au cas analysé précédemment les signaux $b_i(t)$ ne sont plus synchrone d'une part en raison des différences de distances qui existent entre les stations mobiles et la base de transmission et qui introduisent des retards de transmission variés, et d'autre part en raison des décalages existants sur les instants de début d'émission de la part des stations mobiles, ces instants de début d'émission par les stations mobiles n'étant généralement pas synchrones dans un réseau fonctionnant en CDMA. Il n'est donc pas possible de former sur un temps bit une matrice contenant un temps bit complet de tous les signaux de communication. En revanche, compte tenu des procédés existants qui sont destinés à assurer une synchronisation individuelle de chaque séquence d'étalement $C_i(t)$ avec le signal reçu associé à cette séquence d'étalement, il est possible de déterminer à la base de transmission le retard relatif des séquences d'étalement entre elles, ce retard relatif des séquences d'étalement étant en outre égal au retard relatif des signaux de communication $b_i(t)$ puisque ceux-ci sont émis de façon synchrone avec la séquence d'étalement correspondante. Pour celà on choisit une séquence d'étalement dont la longueur est un multiple du temps bit.

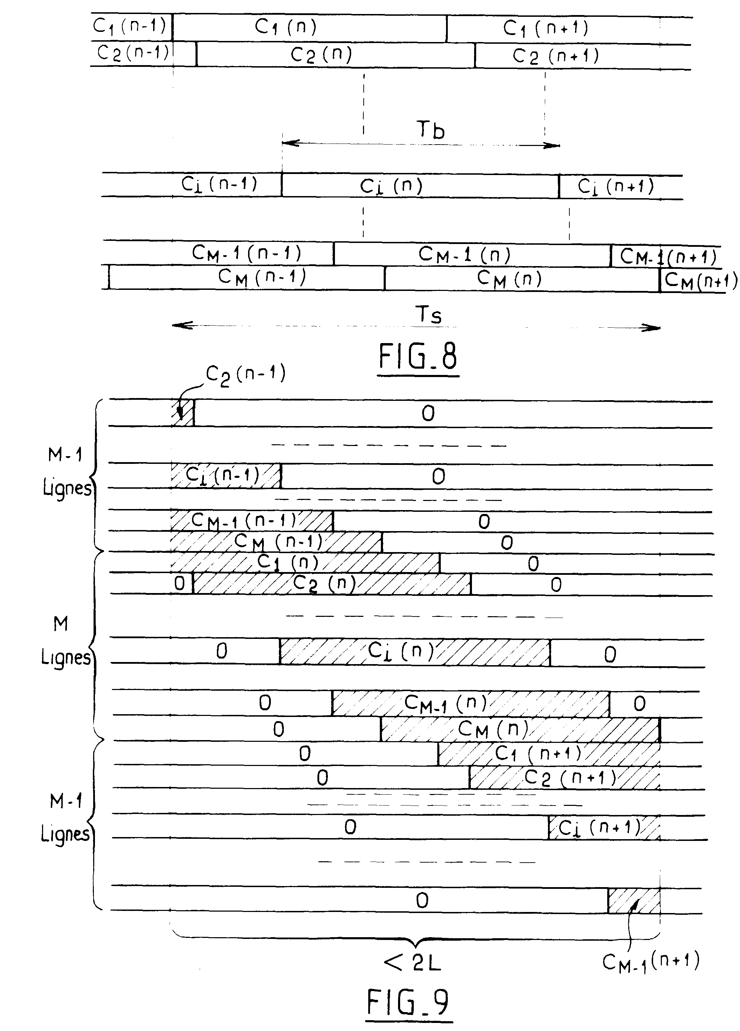

Selon l'invention on propose donc de classer tout d'abord les séquences d'étalement selon des retards relatifs croissants. On obtient alors la représentation illustrée par la figure 8 où l'on a figuré de façon centrale la séquence d'étalement associée au temps bit d'ordre $n$ pour tous les signaux de communication et de part et d'autre une partie des séquences d'étalement correspondantes aux temps bit d'ordre $n$-$1$ et $n$+$1$. On détermine alors un temps symbole noté $Ts$ qui couvre au moins une fois un temps bit complet pour chaque signal de communication. Dans le cas le plus simple illustré sur la figure, le temps symbole correspond au temps qui s'écoule entre le début du temps bit d'ordre $n$ du signal de communication de rang 1, et la fin du temps bit d'ordre $n$ du signal de communication de rang $M$. Un temps bit étant égal à $L$ temps chip, le temps symbole est donc inférieur à $2L$ temps chip compte tenu du classement effectué préalablement par retard croissant.

On assimile alors les $M$ signaux de communication asynchrones à 3M - 2 signaux de communication synchrones en assimilant chaque partie de temps bit contenu dans le temps symbole à une communication séparée, complétée par un zéro sur la partie du temps symbole qui n'est pas occupée par la séquence d'étalement correspondante. On obtient ainsi la représentation de la figure 9 et on constitue une matrice $C$ ayant $3M$-$2$ lignes et un nombre de colonnes inférieur à $2L,$ le nombre exact étant déterminé pour chaque temps bit après la mesure du retard entre le premier et le dernier signal de communication. Une matrice $\Gamma$ est alors calculée comme précédemment à partir de la matrice $C$. La matrice $\Gamma$ obtenue a $3M$ - $2$ lignes et $3M$ - $2$ colonnes. On supprime dans cette matrice les $M$ - $1$ lignes supérieures et inférieures. On obtient ainsi une matrice rectangulaire $\Gamma'$ ayant M lignes et 3M-2 colonnes qui donne les coefficients des combinaisons linéaires à effectuer.

Comme précédemment, on peut soit effectuer le produit de la matrice Γ' par la matrice *C* synchrone à *M* lignes et *L* colonnes et on obtient les séquences de désétalement $D_i(t)$ qui sont mélangées au signal $r(t)$, soit mélanger les séquences d'étalement $C_i(t)$ au signal $r(t)$ reçu et effectuer ensuite des combinaisons linéaires avec les coefficients de Γ'

On peut également adopter un temps symbole couvrant un nombre de temps bit complets supérieur à un de façon à démoduler d'un seul coup les bits associés à plusieurs temps bits. En raison du décalage des séquences d'étalement la matrice C associée à *p* temps bit complets comprendra donc M-1 lignes associées aux portions de séquences d'étalement d'ordre immédiatement inférieur à l'ordre des bits complets, *pM* lignes associées aux temps bit complets, et M-1 lignes associées aux portions de séquences d'étalement d'ordre immédiatement supérieur à l'ordre des bits complets. Pour *p* temps bits, la matrice *C* aura donc *(p+2)M-2* lignes et au maximum *(p+1)L* colonnes. Après calcul de la matrice Γ correspondante la matrice Γ' sera obtenue comme précédemment en supprimant les M-1 lignes supérieures et inférieures.

Dans le cas de trajets multiples plusieurs modes de traitement sont envisagés.

Selon un premier mode de traitement on assimile chacun des chemins multiples pour une même communication à une communication différente et on ajoute donc le nombre correspondant de lignes à la matrice *C*, le procédé étant par ailleurs mis en oeuvre comme prévu dans le cas asynchrone décrit ci-dessus. On notera à ce propos que les chemins multiples peuvent être déterminés d'une façon connue en soi en émettant dans une phase préparatoire une séquence d'apprentissage prédéterminée puis en corrélant la séquence reçue avec la séquence d'apprentissage selon une série de décalages prédéterminés et en notant le décalage obtenu pour chaque corrélation où la séquence reçue coïncide avec une séquence d'apprentissage décalée.

Selon un second mode de traitement on assimile les chemins multiples à un seul chemin dont la séquence d'étalement est une combinaison linéaire des séquences d'étalement, cette combinaison étant l'image du filtre canal qui donnerait une déformation du signal émis analogue à celle que donnent les chemins multiples.

Si l'on désigne par $C_{ij}$ la valeur du bit d'ordre *j* de la séquence d'étalement image de rang *i* on a donc :

$$C'_{ij} = \sum_{k=1}^{N} h(k-j) \; C_{ik}$$

où $C_{ik}$ est la valeur du bit d'ordre *k* de la séquence d'étalement de rang *i* comme précédemment, et *h* (*k-j*) est le coefficient du filtre canal à l'instant d'échantillonnage correspondant à la détermination du filtre canal. Cette détermination correspond en réalité à la mesure du décalage entre les chemins multiples et est effectuée de façon connue en soi dans une phase préalable (qui est périodiquement renouvelée pour mettre à jour ces coefficients) en émettant une séquence d'apprentissage et en effectuant une corrélation du signal reçu par la séquence d'apprentissage décalée selon des décalages prédéterminés, ou encore en utilisant les informations provenant du processus de suivi de synchronisation (également connu en soi) entre la station émettrice et la station réceptrice.

Dans ce second mode de traitement le procédé décrit ci-dessus à propos de signaux de communications asynchrone est mis en oeuvre sans rajouter de lignes à la matrice *C* mais en remplaçant les séquences d'étalement $C_i(n)$ par les séquences d'étalement image $C'_i(n)$

Bien entendu l'invention n'est pas limitée aux modes de réalisation décrits et on peut y apporter des variantes de réalisation sans sortir du cadre de l'invention tel que défini par les revendications.

**Revendications**

1. Procédé de désétalement en réception d'un signal en large bande (r(t)) résultant de la somme de signaux de communication ($b_i(t)$) étalés au moyen de séquences d'étalement ($C_i(t)$) propres à chacun des signaux de communication, et décalées les unes par rapport aux autres d'une portion de temps bit, dans lequel le désétalement est obtenu en assurant une corrélation du signal reçu sur un temps bit selon des combinaisons linéaires des séquences d'étalement, chacune des combinaisons linéaires étant orthogonale à toutes les séquences d'étalement sauf une, et en intégrant ou en sommant le signal obtenu sur un temps bit, caractérisé en ce que les combinaisons linéaires des séquences d'étalement sont obtenues à partir d'une matrice des coefficients des combinaisons linéaires réalisée de la façon suivante : on ordonne les séquences d'étalement selon des retards relatifs croissants, on détermine un temps symbole couvrant chaque signal de communication sur au moins un temps bit complet, et on établit une matrice des coefficients ($\beta_{ij}$) des combinaisons linéaires en formant une matrice représentative des séquences d'étalement ayant des lignes chacune représentative d'une séquence d'étalement pour chaque bit de chaque signal de communication inclus dans le temps symbole, en effectuant un produit de cette matrice avec une matrice transposée de cette matrice, en inversant la matrice du produit, et en sélectionnant au milieu de la matrice inversée une matrice rectangulaire ayant un nombre de lignes égal au nombre (M, pM) de séquences d'étalement représentées sur un temps bit complet.

2. Procédé de désétalement selon la revendication 1 pour un signal reçu ayant suivi des trajets multiples, caractérisé en ce qu'on traite chacun des trajets multiples comme un signal de communication supplémentaire et on ajoute un nombre de lignes correspondant à la matrice représentative des séquences d'étalement.

3. Procédé de désétalement selon la revendication 1 pour un signal reçu ayant suivi des trajets multiples caractérisé en ce qu'on remplace, dans la matrice représentative des séquences d'étalement, une ligne représentative d'une séquence d'étalement par une ligne représentative d'une séquence d'étalement image, cette séquence d'étalement image étant elle-même représentative d'un filtre canal produisant des effets identiques aux chemins multiples pour un signal de communication.

**Patentansprüche**

1. Verfahren zum Entspreizen bei Empfang eines Breitbandsignals (r(t)), das aus der Summe von Kommunikationssignalen ($b_i$(t)) resultiert, die mittels für die jeweiligen Kommunikationssignale geeigneter Spreizfunktionen ($C_i$(t)) gespreizt wurden und die relativ zueinander um einen Teil einer Bitdauer versetzt sind, wobei die Entspreizung erhalten wird, indem man eine Korrelation des während einer Bitdauer empfangenen Signals mit entsprechenden Linearkombinationen der Spreizfunktionen sicherstellt, wobei jede dieser Linearkombinationen zu allen Spreizfunktionen bis auf eine orthogonal ist, und indem man das während einer Bitdauer erhaltene Signal integriert oder summiert, dadurch **gekennzeichnet**, daß die Linearkombinationen der Spreizfunktionen aus einer Koeffizientenmatrix der Linearkombinationen erhalten werden, die in der folgenden Weise erzeugt wird: man ordnet die Spreizfunktionen entsprechend der wachsenden relativen Verzögerungen, man bestimmt eine Symboldauer, welche jedes Kommunikationssignal über mindestens eine vollständige Bitdauer überdeckt, und man stellt eine Koeffizientenmatrix ($\beta_{ij}$) der Linearkombinationen auf, indem man eine für die Spreizfunktionen repräsentative Matrix bildet, deren Zeilen jeweils eine Spreizsequenz für jedes bit jedes Kommunikationssignals innerhalb der Symboldauer darstellt, indem man das Produkt dieser Matrix mit einer transponierten Matrix dieser Matrix multipliziert, die Produktmatrix invertiert und aus der invertierten Matrix eine rechteckige Matrix auswählt, deren Zeilenzahl gleich der Zeilenzahl (M, pM) der Spreizfunktionen ist, die für eine komplette Bitdauer dargestellt sind.

2. Verfahren nach Anspruch 1 für ein empfangenes Signal, das mehrere Bahnen durchlaufen hat, dadurch **gekennzeichnet**, daß man jede der mehrfachen Bahnen wie ein zusätzliches Kommunikationssignal behandelt und eine entsprechende Anzahl von Zeilen der für die Spreizfunktionen repräsentativen Matrix zufügt.

3. Verfahren nach Anspruch 1 für ein empfangenes Signal, das mehrfache Bahnen durchlaufen hat, dadurch **gekennzeichnet**, daß man in der für die Spreizfunktionen repräsentativen Matrix eine für eine Spreizsequenz repräsentative Zeile durch eine Zeile ersetzt, die für eine spiegelbildliche Spreizsequenz repräsentativ ist, wobei diese selbst einen Kanalfilter darstellt, der identische Effekte auf die mehrfachen Bahnen für ein Kommunikationssignal erzeugt.

**Claims**

1. A method of un-spreading, on reception, a wideband signal (r(t)) that results from summing call signals ($b_i$(t)) that are spread by means of spreading sequences ($C_i$(t)) specific to each of the call signals, the sequences being offset from one another by a portion of a bit time, in which un-spreading is obtained by correlating the received signal over a bit time using linear combinations of the spreading sequences, each of the linear combinations being orthogonal to all of the spreading sequences except for one, and by integrating or summing the signal obtained over one bit time, the method being characterized in that the linear combinations of the spreading sequences are obtained from a matrix of linear combination coefficients obtained as follows: the spreading sequences are ordered by increasing relative delay, a symbol time is determined covering each call signal over at least one complete bit time, and a matrix of coefficients ($\beta_{ij}$) of linear combinations is established by forming a matrix representative of spreading sequences having rows each representing a spreading sequence for each bit of each call signal included in the symbol time, by multiplying said matrix with a transposed matrix thereof, by inverting the product matrix, and by selecting a rectangular matrix from the middle of the inverted matrix, the rectangular matrix having a number of rows equal to the number (M, pM) of spreading sequences represented over one complete bit time.

2. An un-spreading method according to claim 1, for a received signal that has followed multiple paths, characterized in that each of the multiple paths is treated as an additional call signal, and a corresponding number of rows is added to the matrix representative of the spreading sequences.

3. An un-spreading method according to claim 1, for a received signal that has followed multiple paths, characterized in that, in the matrix representative of the spreading sequences, a line representative of a spreading sequence is replaced by a line representative of an image spreading sequence, said image spreading sequence itself being representative of a channel filter producing effects identical to the multiple paths for a call signal.

FIG_1

FIG_2

| $b_1(n-1)$ | $b_1(n)$ | $b_1(n+1)$ |
| $b_2(n-1)$ | $b_2(n)$ | $b_2(n+1)$ |
| | | |
| $b_i(n-1)$ | $b_i(n)$ | $b_i(n+1)$ |
| | | |
| $b_M(n-1)$ | $b_M(n)$ | $b_M(n+1)$ |

$$\overleftrightarrow{\quad Tb \quad}$$

## FIG.3

$$C = \begin{bmatrix} C_{11} & C_{12} & \text{------} & C_{1L} \\ C_{21} & C_{22} & \text{------} & C_{2L} \\ \hline C_{i1} & C_{i2} & \text{---}C_{ij}\text{---} & C_{iL} \\ \hline C_{M1} & C_{M2} & \text{------} & C_{ML} \end{bmatrix}$$

## FIG.4

$$\Gamma = \begin{bmatrix} \beta_{11} & \beta_{12} & \text{------} & \beta_{1M} \\ \beta_{21} & & \text{------} & \beta_{2M} \\ \beta_{i1} & \beta_{12} & \text{---}\beta_{ij}\text{---} & \beta_{iM} \\ \beta_{M1} & & \text{------} & \beta_{MM} \end{bmatrix}$$

## FIG.5

FIG.6

FIG_7

FIG.8

FIG.9